# EUROPÄISCHE PATENTSCHRIFT

(11) **EP 4 233 523 B1**
(45) Veröffentlichungstag und Bekanntmachung des Hinweises auf die Patenterteilung: **27.11.2024**
(21) Anmeldenummer: 22215048.4
(22) Anmeldetag: 20.12.2022
(51) Int. Cl.: A01F 15/10

(54) **LANDWIRTSCHAFTLICHE BALLENPRESSE SOWIE VERFAHREN ZU DEREN BETRIEB**
AGRICULTURAL BALER AND METHOD FOR OPERATING THE SAME
PRESSE À BALLES AGRICOLE ET SON PROCÉDÉ DE FONCTIONNEMENT

(30) Priorität: 09.02.2022 DE 102022102975
(43) Veröffentlichungstag der Anmeldung: 30.08.2023
(73) Patentinhaber: Usines CLAAS France S.A.S, 57140 St. Rémy / Woippy (FR)
(72) Erfinder: Marion, Sébastien, 57320 Anzeling (FR); Gaucher, Emile, 52170 CHEVILLON (FR); Walter, Thierry, 57050 Longeville-lès-Metz (FR); Scharf, Thorsten, 66693 Mettlach (DE); Wucher, Renaud, 57070 Metz (FR)
(74) Vertreter: CLAAS Gruppe

(56) Entgegenhaltungen:
- EP-B1- 1 060 652
- EP-B1- 1 306 003
- EP-B1- 2 250 876
- JP-A- 2020 043 829

## Beschreibung

Die Erfindung betrifft eine landwirtschaftliche Ballenpresse gemäß dem Anspruch 1 sowie ein Verfahren zu deren Betrieb gemäß dem Anspruch 13.

Auf einem Feld wachsendes Erntegut wird üblicherweise zur Erntezeit mittels entsprechender landwirtschaftlicher Maschinen geerntet. Da eine Ernte eines ganzen Jahres innerhalb weniger Tage oder Wochen geerntet wird, ist es erforderlich, das Erntegut beispielsweise in Lagerhallen zu bringen, wo es bis zu seiner weiteren Verwendung gelagert werden kann. In diesem Zusammenhang ist es nicht wirtschaftlich, das Erntegut lose zu transportieren, da beispielsweise Heu oder Stroh sehr voluminös sind. Deshalb wird das Erntegut mittels einer Ballenpresse verdichtet, sodass es besonders einfach transportiert und sodann gelagert werden kann.

Eine derartige landwirtschaftliche Ballenpresse zur Verdichtung von Erntegut zu Ernteballen umfasst eine Pickup zur Aufnahme von Erntegut von einem Untergrund. Außerdem umfasst die Ballenpresse eine der Pickup nachgeschaltete Zuführschnecke zur weiteren Förderung des aufgenommenen Ernteguts.

Die Pickup weist typischerweise einen langgestreckten Rotationszylinder mit einer Vielzahl von Aufnahmezinken auf, die sich ausgehend von einer Mantelfläche des Rotationszylinders radial nach außen erstrecken, sodass die Aufnahmezinken in einem bestimmungemäßen Betrieb der Ballenpresse im Zuge eines Drehantriebs der Pickup das auf dem Untergrund aufliegende Erntegut erfassen und in Richtung der Zuführschnecke fördern.

Weiterhin ist ein der Zuführschnecke nachgeschalteter Schneidrotor zur Zerkleinerung des aufgenommenen Ernteguts vor dessen Verdichtung vorgesehen sowie ein mechanischer Rotorantrieb zum Drehantrieb des Schneidrotors. Des Weiteren umfasst die Ballenpresse ein Verdichtungsorgan, mittels dessen das Erntegut zu einem Erntegutballen verdichtbar ist. Für die Verdichtung kommen dabei grundsätzlich verschiedene Prinzipien infrage, beispielsweise der Einsatz eines Verdichtungskolbens bei einer Quaderballenpresse oder der Einsatz eines Pressriemens oder von Presswalzen bei einer Rundballenpresse.

In der Praxis hat sich gezeigt, dass es während des Betriebs der Ballenpresse zu Verstopfungen bzw. Blockaden kommen kann. Diese werden beispielsweise durch zu viel mittels der Pickup aufgenommenes Erntegut verursacht und werden insbesondere durch feuchtes Erntegut begünstigt. Auch auf dem Feld abliegende Gegenstände, die eigentlich nicht aufgenommen werden sollen, beispielsweise Äste oder Steine, können den regelmäßigen Betrieb der Ballenpresse stören.

Wie Erfahrungen aus der Praxis zeigen, kommt es zu solchen Blockaden insbesondere in einem Bereich der Pickup und/oder Zuführschnecke. Dies kann dadurch erklärt werden, dass die Zuführschnecke das Erntegut nicht so schnell weiterführen kann, wie es von der Pickup von dem Untergrund aufgenommen wird. Dies kann beispielsweise dadurch begründet sein, dass auf dem Untergrund Bereiche mit unterschiedlich viel Erntegut beaufschlagt sind. Außerdem strömt das Erntegut weitestgehend turbulent durch die Ballenpresse, insbesondere im Bereich zwischen Pickup und Zuführschnecke. Durch dieses turbulente Verhalten kann es demzufolge rein zufällig zu Materialanhäufungen kommen, die eine Blockade verursachen. Dieses Problem ist dem Stand der Technik bekannt, wobei vielfältige Lösungen vorgeschlagen sind.

Beispielsweise ist der EP 2 250 876 B1 ein Verfahren zum Beseitigen einer Blockade in einer Ballenpresse als bekannt zu entnehmen. Im Rahmen des Verfahrens ist es vorgesehen, zuerst die Blockade in der Ballenpresse zu identifizieren und anschließend zumindest im Wesentlichen gleichzeitig mehrere Blockadebeseitigungsvorrichtungen zu aktivieren. In diesem Zusammenhang ist es vorgesehen, einer Zapfwelle zu signalisieren, dass diese außer Austritt gelange und eine elektrische Spannung zu reduzieren, um dadurch eine Dichte des zu dem Ballen verdichteten Ernteguts zu reduzieren. Weiterhin ist vorgesehen, verschiedene Organe der Ballenpresse zu steuern, beispielsweise ein Leitblech anzuheben, einen Absenkboden abzusenken und die Pickup anzuheben, um schließlich eine Bewegung eines Rotorantriebs umzukehren. Hierdurch soll im folgenden Schritt die Blockade beseitigt werden. Anschließend werden die Blockadebeseitigungseinrichtungen in normale Betriebspositionen zurückgestellt.

Weiterhin ist der EP 1 060 652 B1 ein Antrieb für eine Ballenpresse als bekannt zu entnehmen. Hierbei ist ein Hauptgetriebe vorgesehen, dessen Eingangswelle gemeinsam mit einer Schwungscheibe von einer geeigneten Antriebsquelle angetrieben wird. Außerdem sind eine Antriebsverbindung für das Befüll- und Entleerungsorgan sowie eine weitere Antriebsverbindung mit einer Überlastkupplung für die Pickup vorgesehen. Des Weiteren umfasst die Ballenpresse einen Schneidrotor. Es ist vorgesehen, dass die Antriebsverbindung eine Messeinrichtung aufweist, mittels der eine Belastung des Befüll- und Entleerungsorgans ermittelt werden kann, sodass die Messeinrichtung in ihrer Funktion eine Überlastkupplung einnimmt. Außerdem ist in der Antriebsverbindung der Pickup ein Schaltelement hinter dem Schneidrotor vorgesehen, das mit der Messeinrichtung wirkverbunden ist. Auf diese Weise kann bei Überlast in der Antriebsverbindung des Befüll- und Entleerungsorgans die Antriebsverbindung der Pickup unterbrochen werden und bei Unterschreiten des Überlastfalls die Antriebsverbindung wiederhergestellt beziehungsweise beibehalten werden.

Nachteilig bei dem vorgenannten Stand der Technik ist, dass insbesondere die Pickup und die Zuführschnecke entweder ausschließlich mechanisch oder hydraulisch angetrieben werden. Ein mechanischer Antrieb ermöglicht zwar ein höheres Drehmoment, eignet sich allerdings unzureichend, um Blockaden lösen zu können. Dies ist beispielsweise dadurch begründet, dass ein mechanischer Antrieb üblicherweise ziemlich träge ist und deshalb nicht einfach beziehungsweise schnell angehalten und/oder umgekehrt, das heißt beispielsweise in eine entgegengesetzte Richtung gedreht werden kann. Andererseits kann ein hydraulischer Antrieb kein so hohes Drehmoment bereitstellen wie ein mechanischer Antrieb, eignet sich allerdings besser, um Blockaden zu lösen. Insbesondere ist es besonders einfach, einen Drehsinn des Antriebs umzukehren.

Im Betrieb der Ballenpresse sind die Anforderungen an Pickup und Zuführschnecke unterschiedlich. Während die Pickup ein hohes Drehmoment benötigt, um auch schweres Erntegut aufnehmen zu können, bedarf es der Zuführschnecke nur eines vergleichsweise geringen Drehmomentes. Weiterhin ist es im Falle einer Blockade notwendig, insbesondere die Zuführschnecke entgegen ihrer regelmäßigen Drehrichtung betätigen zu können, um auf diese Weise etwaiges Erntegut wieder rückzuführen und somit eine Blockade lösen zu können. Demgegenüber muss die Pickup währenddessen nicht bewegt werden, sondern es ist vielmehr vorteilhaft, wenn die Pickup stillsteht. Es ist somit erkennbar, dass der Stand der Technik den Anforderungen an die Pickup beziehungsweise die Zuführschnecke nicht gerecht wird.

Es ist Aufgabe der vorliegenden Erfindung, eine landwirtschaftliche Ballenpresse bereitzustellen, die Blockaden besonders zuverlässig und auf einfache Art und Weise beseitigen kann.

Die Aufgabe wird durch eine landwirtschaftliche Ballenpresse gemäß dem Anspruch 1 sowie durch ein Verfahren zu deren Betrieb gemäß dem Anspruch 13 gelöst. Vorteilhafte Ausgestaltungen sind Gegenstand der Unteransprüche.

Es ist erfindungsgemäß vorgesehen, dass die Zuführschnecke mit einem Hydraulikmotor zusammenwirkt, mittels dessen die Zuführschnecke drehantreibbar ist. Die Pickup wird derweil derart mit dem Rotorantrieb zusammen, dass die Pickup mittels des Rotorantriebs drehantreibbar ist. Weiterhin ist zwischen den Rotorantrieb und die Pickup eine Kupplung geschaltet, die wechselweise zwischen einem Einkuppelzustand, in dem die Pickup mit dem Rotorantrieb gekoppelt ist, und einem Auskuppelzustand, in dem die Pickup von dem Rotorantrieb abgekoppelt ist, überführbar ist. Außerdem ist die Kupplung dazu eingerichtet, die Pickup von dem Rotorantrieb abzukoppeln, sobald die Ballenpresse in einen Reversierbetrieb überführt wird, in dem die Zuführschnecke in einem gegenüber einem Normalbetrieb der Ballenpresse entgegengesetzten Drehsinn drehangetrieben wird. Mit anderen Worten steht die Pickup im Reversierbetrieb der Ballenpresse typischerweise still, während die Zuführschnecke entgegen ihrem Drehsinn, den sie im Normalbetrieb der Ballenpresse aufweist, drehangetrieben wird.

Sobald eine Blockade festgestellt ist, kann der Reversierbetrieb der Ballenpresse eingeleitet werden. Hierfür wird einerseits die Pickup mittels der Kupplung von dem Rotorantrieb getrennt. Auf diese Weise wird die Pickup sodann nicht mehr angetrieben, sodass sie stillsteht und kein weiteres Erntegut vom Untergrund aufnimmt, dieses nicht in Richtung der Zuführschnecke befördert und dadurch die vorliegende Blockade nicht verschlimmert. Da sich allein hierdurch die Blockade erfahrungsgemäß nicht zuverlässig beheben lässt, muss das Erntegut, das die Blockade hervorruft, aus der Ballenpresse beseitigt werden. Hierfür ist vorgesehen, dass das Erntegut auf gleiche Weise aus der Ballenpresse hinausbefördert wird, wie es hereinbefördert wurde. In diesem Zusammenhang wird somit der Drehsinn der Zuführschnecke umgekehrt, um Erntegut nicht mehr in die Ballenpresse hinein, sondern aus der Ballenpresse heraus zu befördern. Um dabei nicht durch die Pickup behindert zu werden, steht diese währenddessen still. Der erfindungsgemäß vorgesehene Hydraulikmotor der Zuführschnecke ermöglicht in vorteilhafter Weise ein besonders einfaches Umkehren deren Drehsinns. Zusammenfassend sind die Pickup und die Zuführschnecke somit unabhängig voneinander auf unterschiedliche Weise betreibbar, die Pickup zumindest mittelbar mechanisch, nämlich durch den Rotorantrieb, sowie die Zuführschnecke hydraulisch, nämlich durch den Hydraulikantrieb. Hierdurch ergibt sich der Vorteil, dass die Pickup aufgrund ihres mechanischen Antriebs in Form des Rotorantriebs ein besonders hohes Drehmoment bereitstellen kann und die Zuführschnecke aufgrund ihres hydraulischen Antriebs besonders einfach umschaltbar, das heißt bezüglich ihres Drehsinn umkehrbar ist. Somit vereint die erfindungsgemäße Ballenpresse die Vorteile beider Antriebsarten (mechanisch und hydraulisch) und verbessert hierdurch den Betrieb der Ballenpresse.

Im Zusammenhang mit der Blockade wird die Zuführschnecke so lange entgegen ihrem normalen Drehsinn, in dem sie im Normalbetrieb der Ballenpresse betrieben wird, betätigt, bis die Blockade zumindest im Wesentlichen vollständig beseitigt ist. Die Ballenpresse befindet sich hierbei in ihrem Reversierbetrieb. Wenn die Blockade aufgelöst ist, wird die Ballenpresse wieder in ihren Normalbetrieb überführt. Hierzu wird der Antriebszustand der Zuführschnecke wieder verändert, wobei mittels des Hydraulikmotors der Drehsinn der Zuführschnecke umgestellt wird, sodass diese für den Normalbetrieb der Ballenpresse bestimmungsgemäß betrieben wird. Außerdem wird mittels der Kupplung die Pickup wieder mit dem Rotorantrieb verbunden, sodass die Pickup entsprechend ihrem regelmäßigen Betrieb drehangetrieben wird. Somit ist der Normalbetrieb der Ballenpresse wiederhergestellt und die Blockade beseitigt. Zu den bereits vorgenannten Vorteilen kommt hinzu, dass sich auf diese Weise Blockaden besonders einfach beheben lassen und die Ballenpresse somit besonders komfortabel betreibbar ist.

In einer besonders vorteilhaften Ausgestaltung ist vorgesehen, dass die Kupplung hydraulisch betätigbar ist. Hierdurch ist die Kupplung vorteilhafterweise besonders einfach von dem Einkuppelzustand in den Auskuppelzustand beziehungsweise umgekehrt, überführbar. Durch ein derart einfaches Betätigen der Kupplung kann demzufolge die Pickup besonders einfach vom Rotorantrieb getrennt werden, sodass die Pickup vorteilhafterweise besonders einfach drehangetrieben beziehungsweise stillgelegt werden kann. Dies ist insbesondere deshalb vorteilhaft, da somit die Pickup in kurzen Abständen angeschaltet beziehungsweise abgeschaltet werden kann. In der Praxis hat sich gezeigt, dass hierdurch vorteilhafterweise Blockaden besonders zuverlässig beseitigt werden können.

Die Erfindung ist dann besonders vorteilhaft, wenn ein Hydrauliksystem vorgesehen ist, das mit dem Hydraulikmotor und/oder mit der Kupplung zusammenwirkt, wobei vorzugsweise die Pickup infolge einer Veränderung eines Antriebszustands der Zuführschnecke automatisch von dem Rotorantrieb abkoppelbar oder automatsch an den Rotorantrieb ankoppelbar ist. Insbesondere kann infolge einer Blockade und der infolgedessen erfolgenden Überführung der Ballenpresse von ihrem Normalbetrieb in ihren Reversierbetrieb der Antriebszustand der Zuführschnecke verändert werden. Dies kann insbesondere dadurch erfolgen, dass der Hydraulikmotor der Zuführschnecke, der mit dem Hydrauliksystem zusammenwirkt, in entgegengesetzte Richtung betrieben wird. Diese Umstellung kann automatisch, insbesondere durch Wirken einer Steuerung, die Umstellung der Kupplung bewirken und hierdurch die Pickup von dem Rotorantrieb abkoppeln.

Dies kann mittels des Hydrauliksystems erfolgen, wobei das Hydrauliksystem die Kupplung derart betätigt, dass diese von einem Einkuppelzustand in den Auskuppelzustand überführt wird. Beispielsweise ist es denkbar, dass die Steuerung ein Steuerventil steuert, das einen mittels des Hydrauliksystems bereitgestellten hydraulischen Druck auf die Kupplung schaltet, woraufhin diese von ihrem Einkuppelzustand in ihren Auskuppelzustand überführt wird. Außerdem kann mittels des Hydrauliksystem der Hydraulikmotor betätigt werden, sodass die Zuführschnecke ihren Drehsinn ändert, bis die Blockade behoben ist. Auch dies kann mittels des Umschaltens eines oder mehrerer Steuerventile erfolgen. Sodann kann zwecks Überführung der Ballenpresse von dem Reversierbetrieb in den Normalbetrieb wiederum mittels des Hydrauliksystems die Kupplung von dem Auskuppelzustand in den Einkuppelzustand überführt werden, sodass die Pickup wieder mit dem Rotorantrieb gekoppelt ist und bestimmungsgemäß drehangetrieben wird. Ferner kann mittels des Hydrauliksystems die Zuführschnecke wieder in ihrem bestimmungsgemäßen Drehsinn angetrieben werden. Die Ballenpresse befindet sich daraufhin wieder in ihrem Normalbetrieb. Hierdurch ergibt sich der Vorteil, dass die Ballenpresse besonders einfach und ohne manuelles Eingreifen von dem Normalbetrieb in den Reversierbetrieb beziehungsweise umgekehrt überführt werden kann, insbesondere durch alleiniges Umschalten von Steuerventilen, die einen Hydraulikdruck des Hydrauliksystems zwecks Umschaltung sowohl der Zuführschnecke als auch der Kupplung steuern.

Eine weitere besonders vorteilhafte Ausgestaltung kennzeichnet sich durch eine Steuerung, mittels der infolge der Veränderung des Antriebszustands der Zuführschnecke die Kupplung mittelbar oder unmittelbar betätigbar ist. In Abhängigkeit von dem Antriebszustand der Zuführschnecke kann die Kupplung von dem Einkuppelzustand in den Auskuppelzustand beziehungsweise umgekehrt überführt werden. Wird beispielsweise festgestellt, dass sich die Drehzahl der Zuführschnecke verringert oder ihr Drehmoment ansteigt, kann dies ein Zeichen für eine Blockade sein. Die Ballenpresse kann daraufhin manuell mittels eines Schalters oder automatisch mittels einer Steuerung in ihren Reversierbetrieb überführt werden, in dem der Antriebszustand der Zuführschnecke geändert und mithin im entgegengesetzten Drehsinn betrieben wird. Begleitend wird mittels der Steuerung zumindest mittelbar die Kupplung betätigt, sodass diese von ihrem Einkuppelzustand in ihren Auskuppelzustand überführt wird und somit die Pickup stilllegt. Gemäß obiger Beschreibung kann dies beispielsweise mittels Schaltung eines oder mehrerer Steuerventile eines Hydrauliksystems erfolgen. Anschließend, beispielsweise wenn die Blockade aufgelöst ist und/oder nach einer vordefinierten Zeit und/oder infolge einer manuellen Betätigung durch einen Maschinenführer, kann mittels der Steuerung die Kupplung wieder eingekuppelt, das heißt von dem Auskuppelzustand in den Einkuppelzustand überführt werden. Hierdurch ergibt sich der Vorteil, dass die Ballenpresse besonders einfach betrieben werden kann, da das Einkuppeln und Auskuppeln der Kupplung automatisch erfolgt. Außerdem wird der Drehsinn der Zuführschnecke wieder geändert, sodass diese bestimmungsgemäß betrieben wird.

Gemäß einer weiteren besonders vorteilhaften Ausgestaltung ist die Erfindung durch eine mit der Steuerung zusammenwirkende Sensoreinrichtung gekennzeichnet, die dem Hydraulikmotor zugeordnet ist, wobei mittels der Sensoreinrichtung eine Veränderung eines Betriebsdrucks des Hydraulikfluids des Hydraulikmotors feststellbar ist. Ein Anstieg des Betriebsdrucks über einen vorgebbaren Schwellenwert, der beispielsweise in Versuchen ermittelt werden kann, kann ein Indikator sein, dass eine Blockade vorliegt, sodass infolgedessen mittels der Steuerung die Ballenpresse in ihren Reversierbetrieb überführt wird. Dies hat zum Vorteil, dass die Ballenpresse besonders sicher und bedarfsgerecht betrieben werden kann.

Gemäß einer weiteren besonders vorteilhaften Ausgestaltung der Erfindung ist vorgesehen, dass bei Vorliegen der Ballenpresse in einem Normalbetrieb, in dem die Zuführschnecke bestimmungsgemäß drehangetrieben wird, die Kupplung in ihrem Einkuppelzustand vorliegt. Mit anderen Worten ist im Normalbetrieb die Kupplung eingekuppelt, sodass die Pickup mit dem Rotorantrieb wirkverbunden ist und die Pickup somit angetrieben wird. Der Normalbetrieb ist gemäß dieser Ausgestaltung demzufolge dadurch gekennzeichnet, dass die Zuführschnecke und die Pickup betrieben werden. Dadurch, dass die Kupplung im Normalbetrieb eingekuppelt ist, kann ein besonders sicherer und zuverlässiger Betrieb der Ballenpresse bewerkstelligt werden.

Vorteilhafterweise sieht eine weitere Ausgestaltung der Erfindung vor, dass bei Vorliegen der Ballenpresse in einem Reversierbetrieb, in dem die Zuführschnecke in einem gegenüber dem Normalbetrieb entgegengesetzten Drehsinn drehangetrieben wird, die Kupplung in ihrem Auskuppelzustand vorliegt. In diesem Fall ist die Kupplung also geöffnet, das heißt die Pickup ist nicht wirkverbunden mit dem Rotorantrieb, sondern ist ausgekuppelt und steht somit still. Durch eine derartige Trennung der Pickup von deren Rotorantrieb kann vorteilhafterweise sichergestellt werden, dass die Pickup nicht versehentlich einkuppelt. Mit anderen Worten kann während des Reversierbetriebs der Ballenpresse sichergestellt werden, dass die Pickup ausgekuppelt, das heißt von dem Rotorantrieb getrennt, bleibt. Hierdurch ergibt sich der Vorteil, dass die Ballenpresse besonders sicher betrieben werden kann.

Gemäß einer weiteren besonders vorteilhaften Ausgestaltung ist vorgesehen, dass in einem Blockadezustand der Zuführschnecke, in dem die Zuführschnecke durch Erntegut blockiert ist, die Kupplung in ihrem Auskuppelzustand vorliegt. Die Pickup ist also im Blockadezustand nicht mit dem Rotorantrieb wirkverbunden. Die Vorteile sind bereits vorstehend erläutert.

Ein weiterer Vorteil ergibt sich dann, wenn ein Schalter vorgesehen ist, der von einem Maschinenführer der Ballenpresse betätigbar ist, wobei die Ballenpresse mittels Betätigung des Schalters in einen Reversierbetrieb überführbar ist, in dem die Zuführschnecke in einem gegenüber einem Normalbetrieb der Ballenpresse entgegengesetzten Drehsinn drehangetrieben wird. Ein Bediener kann beispielsweise anhand der von der Sensoreinrichtung erfassten Daten feststellen beziehungsweise beurteilen, ob eine Blockade vorliegt beziehungsweise sich anbahnt. Neben den von der Sensoreinrichtung erfassten Daten kann der Bediener außerdem beispielsweise hören oder sehen, ob eine Blockade vorliegt. Mit anderen Worten kann der Bediener beispielsweise durch auffällige Geräusche und Inaugenscheinnahme der Pickup und/oder der Zuführschnecke beurteilen, ob eine Blockade vorliegt. Davon abhängig kann der Bediener entscheiden, ob er den Reversierbetrieb einleitet. Hierdurch ergibt sich der Vorteil, dass die Ballenpresse besonders individuell und bedarfsgerecht betreibbar ist.

Vorteilhafterweise ist in einer Ausgestaltung der Erfindung vorgesehen, dass die Kupplung eine Spannfeder umfasst, mittels deren Spannkraft die Kupplung in einem Normalbetrieb der Ballenpresse in ihrem Einkuppelzustand gehalten ist. Auf diese Weise ist sichergestellt, dass die Kupplung nicht versehentlich auskuppelt, beispielsweise durch Ruckeln oder Schläge, die durch Überfahren von Hügeln oder Mulden verursacht werden können. Hierdurch ergibt sich der Vorteil, dass die Ballenpresse besonders sicher und zuverlässig betrieben werden kann.

Weiterhin ist die Erfindung dann besonders vorteilhaft ausgebildet, wenn die Kupplung einen Hydraulikanschluss zum Anschluss an ein Hydrauliksystem aufweist, wobei der Anschluss derart vorgenommen ist, dass ein von dem Hydrauliksystem bereitgestellter Hydraulikdruck eine Gegenkraft zu der Spannkraft bewirkt, sodass bei einer Beaufschlagung der Kupplung mit einem die Spannkraft übersteigenden Hydraulikdruck die Kupplung entgegen der Spannfeder in ihren Auskuppelzustand überführbar ist. Mittels des Hydrauliksystems kann somit die Kupplung von dem Einkuppelzustand in den Auskuppelzustand beziehungsweise umgekehrt gebracht werden.

In einer weiteren besonders vorteilhaften Ausgestaltung ist vorgesehen, dass die Steuerung mit einem Steuerventil wirkverbunden ist, mittels dessen ein Hydraulikdruck des Hydrauliksystems auf die Kupplung schaltbar ist. Mittels des Steuerventils kann der Hydraulikdruck genau so eingestellt werden, dass die Kupplung schaltet, beispielsweise indem der Hydraulikdruck die Spannkraft überwindet. Hierdurch ergibt sich der Vorteil, dass die Kupplung besonders präzise bedient werden kann, wodurch außerdem vorteilhafterweise ein besonders geringer Verschleiß der Kupplung bewerkstelligt werden kann. Insbesondere kann ein solches Steuerventil einen elektrischen Aktor aufweisen, der wechselweise bestromt oder nicht-bestromt wird, sodass das Steuerventil zwischen verschiedenen Zuständen umschaltbar ist.

Gemäß einer weiteren besonders vorteilhaften Ausgestaltung ist vorgesehen, dass die Kupplung mit einer Sensoreinrichtung zusammenwirkt, mittels der feststellbar ist, ob sich die Kupplung in ihrem Einkuppelzustand oder ihrem Auskuppelzustand befindet. Der Bediener erhält hierdurch Auskunft darüber, ob die Kupplung eingekuppelt oder ausgekuppelt ist und kann dementsprechend agieren. Auch im Zusammenspiel mit der Steuerung und/oder dem Hydrauliksystem kann die Sensoreinrichtung dieser und/oder diesem mitteilen, in welchem Zustand sich die Kupplung befindet. Infolgedessen kann der von der Sensoreinrichtung ermittelte Zustand beispielsweise an die Steuerung übermittelt werden, die daraufhin das Hydrauliksystem steuert und dementsprechend ein Einkuppeln beziehungsweise Auskuppeln der Kupplung bewirkt. Hierdurch ergibt sich der Vorteil, dass die Ballenpresse zumindest weitestgehend automatisch betrieben werden kann. Vorteilhafterweise lässt sich hierdurch ein besonders effizienter Betrieb bewerkstelligen, der außerdem besonders fehlerfrei ist, da Fehler durch menschliches Handeln besonders eingeschränkt werden.

Die Erfindung betrifft außerdem ein Verfahren zum Betrieb der vorgenannten Ballenpresse. Vorteile sowie Ausführungen zu der Ballenpresse sind gleichermaßen auf das Verfahren zutreffend sowie umgekehrt.

Das Verfahren ist dann besonders vorteilhaft, wenn ein Betriebsdruck des Hydraulikfluids des Hydraulikmotors mittels einer Sensoreinrichtung überwacht wird, wobei im Falle eines Anstiegs des Betriebsdrucks, insbesondere infolge einer unbeabsichtigten Blockade der Zuführschnecke, eine Information an eine Steuerung der Ballenpresse gesendet wird, die daraufhin einen Steuerbefehl sendet, in dessen Folge die Pickup von dem Rotorantrieb abgekoppelt wird. Ein Anstieg des Betriebsdrucks des Hydraulikmotors kann als Indikator für eine Blockade der Zuführschnecke interpretiert werden. Dies ist dadurch begründet, dass ein erhöhter Betriebsdruck ein Anzeichen dafür ist, dass der Hydraulikmotor eine erhöhte Leistung aufbringen muss. Ein solcher Fall kann beispielsweise durch eine Blockade begründet sein, da hierbei die Zuführschnecke mit besonders viel Erntegut beaufschlagt ist und sich nur erschwert, insbesondere langsam und/oder ungleichmäßig, dreht. Mittels der Sensoreinrichtung kann somit eine Blockade besonders zuverlässig erkannt werden. Hierdurch ergibt sich der Vorteil, dass die Ballenpresse besonders schonend betrieben werden kann, da Blockaden besonders frühzeitig erkannt werden und durch Einleiten entsprechender Maßnahmen (Überführung der Ballenpresse in ihren Reversierbetrieb: Auskuppeln der Pickup und Umkehrung des Drehsinns der Zuführschnecke) mögliche Schäden abgewendet werden können.

Weiterhin ist das Verfahren dann besonders vorteilhaft, wenn die Kupplung hydraulisch betätigt wird, wobei die Kupplung zur Überführung in ihren Auskuppelzustand mit einem Hydraulikdruck eines Hydrauliksystems beaufschlagt und zur Überführung in ihren Einkuppelzustand der Hydraulikdruck abgebaut wird, vorzugsweise sukzessive. Mit anderen Worten kann die Kupplung mittels Beaufschlagung durch den Hydraulikdruck sukzessive geöffnet beziehungsweise geschlossen werden. Insbesondere beim Einkuppeln ist dies besonders vorteilhaft, da die Kupplung nicht schlagartig belastet wird, sondern nach und nach geschlossen wird und dadurch sukzessive kraftschlüssig wird. Hierdurch ergibt sich der Vorteil, dass die Kupplung besonders materialschonend betrieben werden kann, wodurch sich ein besonders verschleißarmer und somit besonders kostengünstiger Betrieb der Ballenpresse bewerkstelligen lässt.

Die Erfindung ist nachstehend anhand eines Ausführungsbeispiels, das in den Figuren dargestellt ist, näher erläutert. Es zeigt:
- Fig. 1:: eine schematische Seitenansicht einer erfindungsgemäßen Ballenpresse;
- Fig. 2:: eine schematische Übersichtszeichnung;
- Fig. 3:: eine schematische Ansicht einer Kupplung mit einem Antrieb;
- Fig. 4:: eine schematische Seitenansicht auf eine Pickup und eine Zuführschnecke während eines Normalbetriebs der Ballenpresse; und
- Fig. 5:: eine schematische Seitenansicht wie Figur 4, jedoch während eines Reversierbetriebs der Ballenpresse.

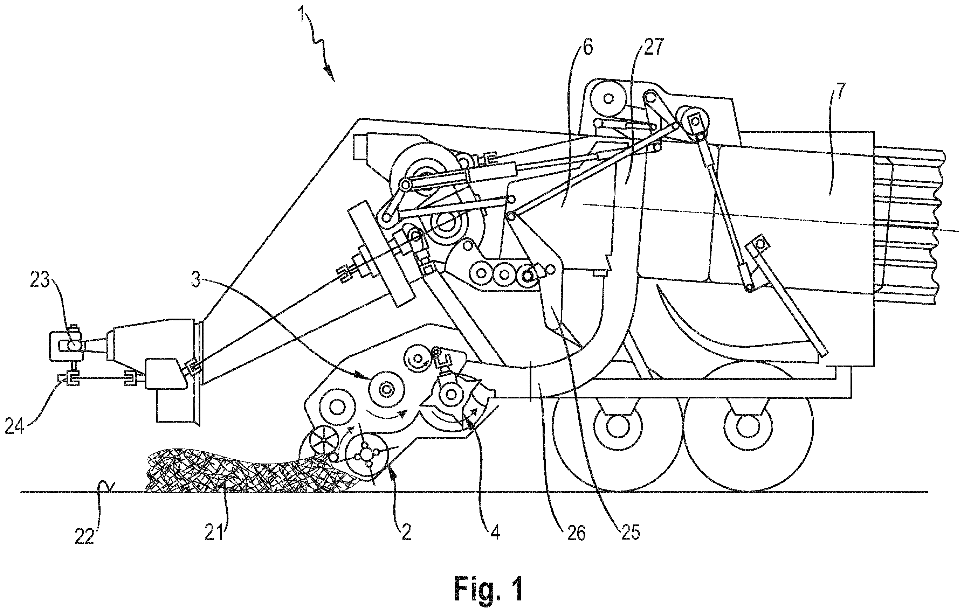

**Figur 1** zeigt in einer schematischen Seitenansicht eine erfindungsgemäße Ballenpresse **1.** Die Ballenpresse **1** ist dazu ausgebildet, auf einem Untergrund **22** abliegendes Erntegut **21** aufzunehmen und zu Erntegutballen **7** zu verdichten. Zum Betrieb wird die Ballenpresse **1** als Anbaugerät an eine landwirtschaftliche Arbeitsmaschine, beispielsweise einen Traktor, angehängt, und zwar mittels einer Anhängekupplung **23.** Der Traktor ist aus Gründen der Übersichtlichkeit nicht in **Figur 1** dargestellt. Außerdem wird die Ballenpresse mittels einer Abtriebswelle **24** mit einem Antrieb des Traktors verbunden, sodass die Ballenpresse **1** von dem Traktor mit Leistung versorgt werden kann.

Um das Erntegut **21** von dem Untergrund **22** aufnehmen zu können, weist die Ballenpresse **1** eine Pickup **2** auf. Die Pickup **2** weist einen langgestreckten Rotationszylinder mit einer Vielzahl von Aufnahmezinken **29** auf, die sich ausgehend von einer Mantelfläche des Rotationszylinders radial nach außen erstrecken, sodass die Aufnahmezinken **29** in einem bestimmungemäßen Betrieb der Ballenpresse **1** im Zuge eines Drehantriebs der Pickup **2** in solcher Weise nah über den Untergrund **22** geführt werden, dass sie das auf dem Untergrund **22** aufliegende Erntegut **21** erfassen.

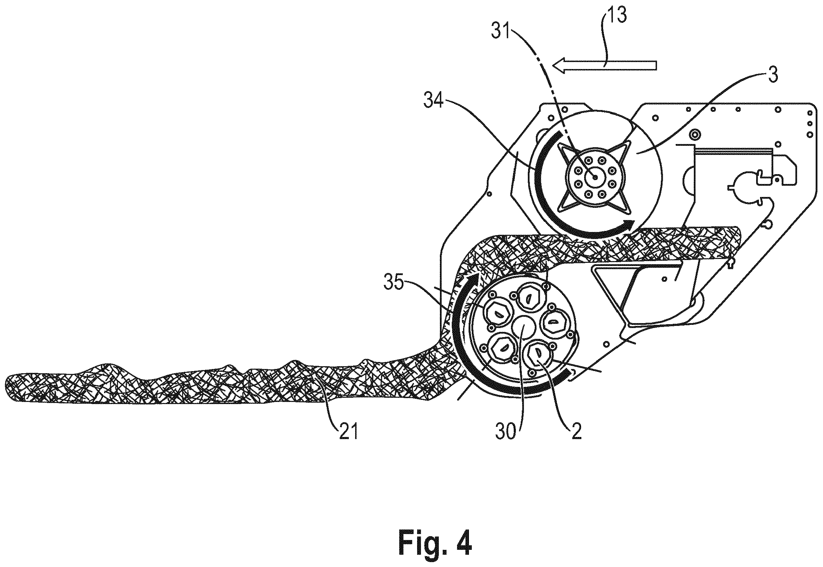

Von dort wird das mittels der Pickup **2** aufgenommene Erntegut in Richtung einer Zuführschnecke 3 befördert, wie beispielsweise in **Figur 4** erkennbar ist. Sodann wird das Erntegut **21** einem Schneidrotor **4** zugeführt, der das Erntegut **21** zerkleinert, sodass es anschließend besser verdichtet werden kann.

Das zerkleinerte Erntegut **21** wird anschließend mittels eines Raffers **25** portionsweise einem Vorkanal **26** zugeführt. Über diesen Vorkanal **26** gelangt das Erntegut **21** in einen Hauptkanal **27,** der entsprechend einer endgültigen Form der Erntegutballen **7** vorliegend zumindest im Wesentlichen einen rechteckigen Querschnitt aufweist und sich in Fahrzeuglängsrichtung erstreckt. Dies ist besonders gut in **Figur 1** erkennbar. Außerdem weist die Ballenpresse 1 ein Verdichtungsorgan 6 auf, bei dem es sich um einen Kolben handelt. Das Verdichtungsorgan **6** wirkt derart mit dem Hauptkanal **27** zusammen, dass sich das Verdichtungsorgan **6** zyklisch in dem Hauptkanal **27** hin und her bewegt, dabei das Erntegut innerhalb des Hauptkanals **27** erfasst und zusammendrückt, also komprimiert. Durch wiederholtes Zuführen weiteren Ernteguts **21** in den Hauptkanal **27** und wiederholtes Verdichten mittels des Verdichtungsorgans **6** bildet sich an einem dem Fahrzeugende zugewandten Ende des Hauptkanals **27** der Erntegutballen **7.** Mit anderen Worten wird mittels des Verdichtungsorgans **6** das Erntegut **21** immer wieder an das Ende des Hauptkanals **27** in Richtung des bereits verdichteten Ernteguts **21** gedrückt, sodass schließlich der Erntegutballen **7** entsteht.

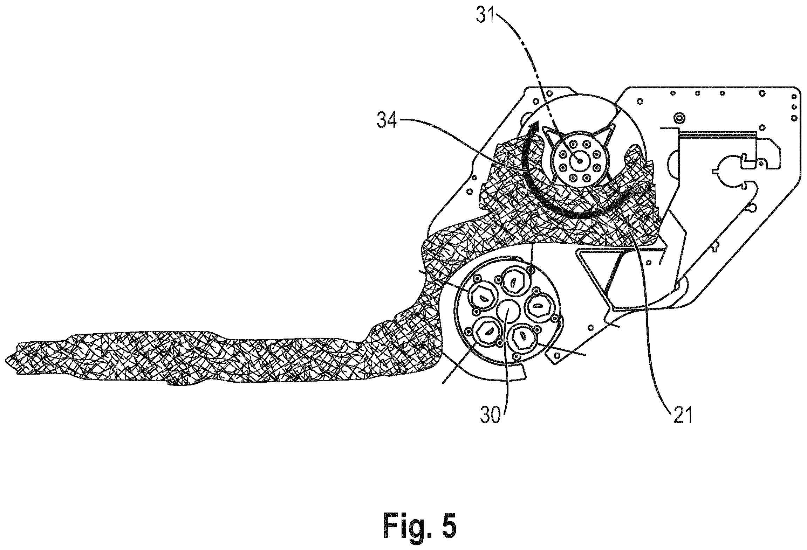

Während des Betriebs kann es aus einer Vielzahl von Gründen, insbesondere in einem Bereich der Pickup **2** und der Zuführschnecke **3,** zu einer Verstopfung bzw. Blockade kommen. Diese kann beispielsweise durch herumliegende und versehentlich aufgenommene Gegenstände, wie zum Beispiel Steine und/oder Äste, versursacht werden. Auch zu feuchtes Erntegut **21** kann zu einer Blockade führen, indem es die Pickup **2** gewissermaßen "verklebt" und somit behindert. Die beschriebene Blockade ist besonders gut in **Figur 5** erkennbar.

Während des regelmäßigen Betriebs wird die Ballenpresse **1** in Richtung des Pfeiles **13** geführt, wobei sich die Pickup **2** um eine Drehachse **30** in Richtung des Pfeils **35** und die Zuführschnecke **3** um eine Drehachse **31** in Richtung des Pfeils **34** drehen. Dies ist in **Figur 4** dargestellt und veranschaulicht, dass die Pickup **2** und die Zuführschnecke **3** während des regelmäßigen Betriebs in entgegengesetzte Richtungen drehen. Hierdurch wird das Erntegut **21** besonders gut von der Pickup and die Zuführschnecke **3** weitergegeben.

Im Falle einer Blockade, die in **Figur 5** dargestellt ist, wird die Ballenpresse **1** angehalten, was durch den durchkreuzten Pfeil **13** veranschaulicht ist. Außerdem wird die Pickup **2** nicht weiter betrieben, damit diese kein weiteres Erntegut **21** in die Ballenpresse **1** und insbesondere in Richtung der Zuführschnecke **3** befördert. Wie besonders gut in Zusammenschau der **Figuren 4** **und** **5** erkennbar ist, dreht die Zuführschnecke **3** gemäß **Figur 5** zur Beseitigung der Blockade entgegen einem Drehsinn, den die Zuführschecke **3** bestimmungsgemäß beim Betrieb der Ballenpresse **1** in deren Normalbetrieb aufweist. Anders ausgedrückt wird der Drehsinn der Zuführschnecke **3** umgekehrt, um die Blockade zu beseitigen. Hierdurch wird das Erntegut **21** aus der Ballenpresse **1** herausbefördert, sodass die Blockade beseitigt wird. Dieser Betriebszustand der Ballenpresse **1** wird als Reversierbetrieb bezeichnet.

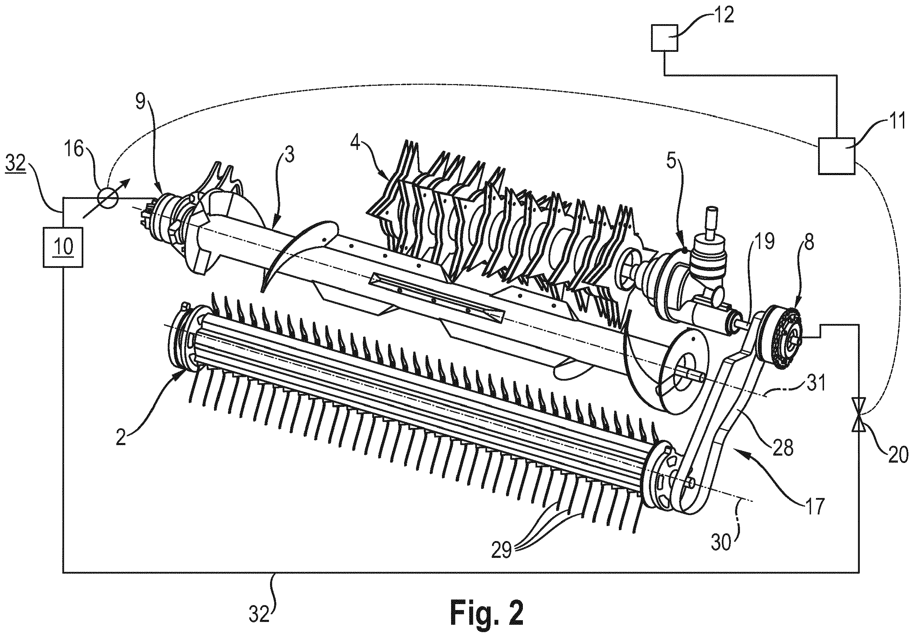

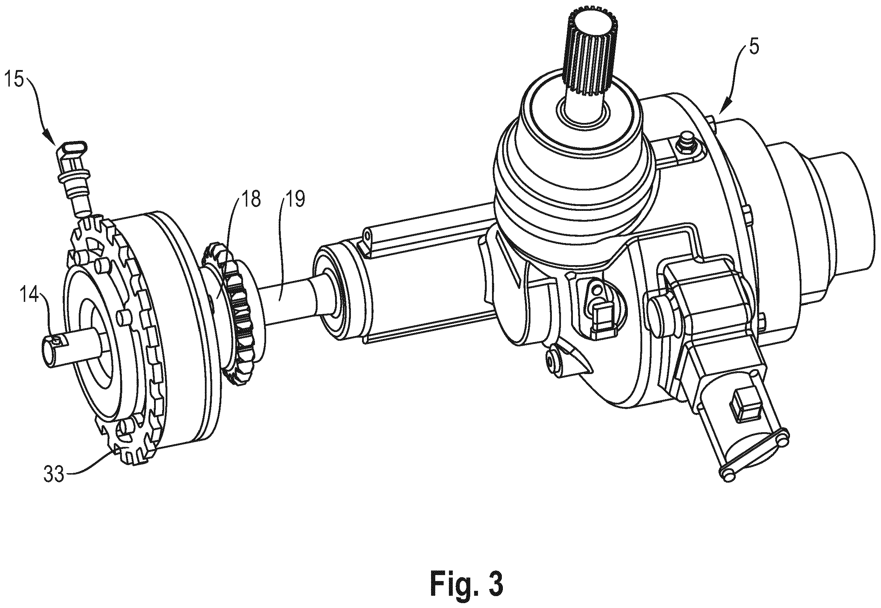

Die Funktionsweise des Reversierbetriebs der Ballenpresse **1** kann anhand von **Figur 2** **und** **3** besonders deutlich nachvollzogen werden. Die Ballenpresse **1** weist einen Rotorantrieb **5** auf, mittels dessen zumindest mittelbar der Schneidrotor **3** und die Pickup **2** angetrieben werden können. Wie in **Figur 2** erkennbar ist, ist der Rotorantrieb **5** seitlich neben dem Schneidrotor **3** angeordnet und mit diesem verbunden. Hingegen ist der Rotorantrieb **5** mit der Pickup **2** nicht unmittelbar verbunden, sondern mittels einer Kupplung **8,** die an einer Abtriebswelle **19** des Rotorantriebs **5** angebunden ist. Hierbei ist ein Riementrieb **17** vorgesehen, mittels dessen die Pickup **2** angetrieben wird. Dieser Riementrieb **17** umfasst eine Riemenscheibe **18,** die an der Kupplung **8** angeordnet ist, wie besonders gut in **Figur 3** erkennbar ist, und einen Treibriemen **28,** der einseitig auf der Riemenscheibe **18** eingreift und anderseitig mit der Pickup **2** verbunden ist. Mit anderen Worten sind die Kupplung **8** und die Pickup **2** mittels des Riementriebs **17** miteinander wirkverbunden.

Im Gegensatz zu diesem mechanischen Antrieb der Pickup **2** und des Schneidrotors **4** in Form des Rotorantriebs **5,** wird die Zuführschnecke **3** mittels eines hydraulischen Antriebs in Form eines Hydraulikmotors **9** angetrieben.

Um die Kupplung **8** schalten zu können, also von einem Einkuppelzustand, in dem die Kupplung **8** Leistung von der Abtriebswelle **24** abnimmt, in einen Auskuppelzustand, in dem die Kupplung **8** keine Leistung von der Abtriebswelle **24** abnimmt, sondern keine Verbindung mit dieser hat, weist die Ballenpresse **1** in dem gezeigten Beispiel außerdem ein Hydrauliksystem **10** auf. Das Hydrauliksystem **10** umfasst eine Sensoreinrichtung **16,** die mit dem Hydraulikmotor **9** verbunden ist und von dessen Hydraulikfluid beispielsweise einen Betriebsdruck ermitteln kann, und ein Steuerventil **20,** mittels dessen die Kupplung **8** schaltbar ist. Die Sensoreinrichtung **16** und das Steuerventil **20** sind jeweils mit einer Hydraulikleitung **32** in das Hydrauliksystem **10** eingebunden.

Des Weiteren umfasst die Ballenpresse **1** eine Steuerung **11,** die datenübertragend, insbesondere leitungslos, mit der Sensoreinrichtung **16** und dem Steuerventil **20** verbunden ist. Außerdem ist die Steuerung **11** mit einem Schalter **12** verbunden, der durch einen Maschinenführer manuell betätigt werden kann, wodurch dieser in die Steuerung **11** eingreifen kann.

Die Kupplung **8** weist weiterhin ein Messrad **33** sowie eine Sensoreinrichtung **15** auf. Die Sensoreinrichtung **15** wirkt derart mit dem Messrad **33** zusammen, dass festgestellt werden kann, ob die Kupplung **8** sich in ihrem Einkuppelzustand oder ihrem Auskuppelzustand befindet. Die Sensoreinrichtung **15** ist weiterhin mit der Steuerung **11** datenübertragend, insbesondere leitungslos verbunden, was in den Figuren nicht dargestellt ist.

Die Sensoreinrichtung **16** ermittelt während des Betriebs der Ballenpresse **1** einen Betriebsdruck eines Hydraulikfluids des Hydraulikmotors **9,** der die Zuführschnecke **3** antreibt, und übermittelt diesen an die Steuerung **11,** die diesen auswertet. Der Betriebsdruck steigt an, wenn eine Blockade der Zuführschnecke **3** vorliegt, da der Hydraulikmotor **9** dann mehr Drehmoment aufbringen muss, um die Zuführschnecke **3** trotz der Blockade drehanzutreiben. Sobald der Betriebsdruck einen festgelegten Schwellenwert übersteigt, wird dies von der Steuerung **11** als Blockade interpretiert. Infolgedessen initiiert die Steuerung **11** den Reversierbetrieb der Ballenpresse **1,** um dadurch die Blockade zu beseitigen.

Hierzu steuert die Steuerung **11** das Steuerventil **20,** sodass dieses die Kupplung **8** von dem Einkuppelzustand in den Auskuppelzustand überführt. Hierfür weist die Kupplung **8** einen Hydraulikanschluss **14** auf, wie besonders gut in **Figur 3** erkennbar ist. Die Kupplung **8** wird somit in den Auskuppelzustand überführt, in dem sie offen ist, was zur Folge hat, dass die Pickup **2** nicht weiter angetrieben wird, sondern stillsteht. Mit anderen Worten wird die Kupplung **8** mit einem Hydraulikdruck beaufschlagt, und zwar indem das Hydrauliksystem **10** diesen bereitstellt, über die Hydraulikleitung **32** an das Steuerventil **20** leitet, und von dort mittels des Hydraulikanschlusses **14** an die Kupplung **8** überträgt. Infolge des Hydraulikdrucks kann insbesondere eine Spannkraft einer Spannfeder der Kupplung **8,** die diese normalerweise in ihrem Einkuppelzustand hält, überwunden werden, sodass die Kupplung **8** entgegen der Spannkraft in ihren Auskuppelzustand überführt wird. In der Folge befindet sich die Kupplung **8** im Auskuppelzustand, das heißt sie ist offen, sodass keine Leistung an die Pickup **2** übertragen wird und diese somit stillsteht.

Im gleichen Zuge steuert die Steuerung **11** den Hydraulikmotor **9,** sodass dieser seinen Drehsinn von dem Normalbetrieb der Ballenpresse **1** (vergleiche **Figur 4**) umgekehrt (vergleiche **Figur 5**). Mit anderen Worten befördert die Zuführschnecke **3** auf diese Weise das für die Blockade verantwortliche Erntegut **21** nicht weiter in die Ballenpresse **1** hinein, sondern befördert diese aus der Ballenpresse **1** heraus. In diesem Zusammenhang ist es vorteilhaft, dass die Pickup **2** stillgelegt ist, da das Erntegut **21** somit nicht wieder direkt aufgenommen wird.

Anschließend, das heißt sobald die Blockade beseitigt ist, wird die Kupplung **8** wieder geschlossen, das heißt in ihren Einkuppelzustand überführt, sodass die Pickup **2** wieder mittels des Rotorantriebs **5** drehangetrieben wird. Außerdem wird der Drehsinn der Zuführschnecke **3** ebenfalls wieder geändert. Insgesamt wird hierdurch der Normalbetrieb der Ballenpresse **1** wiederhergestellt.

### Bezugszeichenliste

- 1: Ballenpresse
- 2: Pickup
- 3: Zuführschnecke
- 4: Schneidrotor
- 5: Rotorantrieb
- 6: Verdichtungsorgan
- 7: Erntegutballen
- 8: Kupplung
- 9: Hydraulikmotor
- 10: Hydrauliksystem
- 11: Steuerung
- 12: Schalter
- 13: Pfeil
- 14: Hydraulikanschluss
- 15: Sensoreinrichtung
- 16: Sensoreinrichtung
- 17: Riementrieb
- 18: Riemenscheibe
- 19: Abtriebswelle
- 20: Steuerventil
- 21: Erntegut
- 22: Untergrund
- 23: Anhängekupplung
- 24: Abtriebswelle
- 25: Raffer
- 26: Vorkanal
- 27: Hauptkanal
- 28: Treibriemen
- 29: Finger
- 30: Drehachse
- 31: Drehachse
- 32: Hydraulikleitung
- 33: Messrad
- 34: Pfeil
- 35: Pfeil

## Patentansprüche

1. Landwirtschaftliche Ballenpresse (1) zur Verdichtung von Erntegut zu Erntegutballen, umfassend
- eine Pickup (2) zur Aufnahme von Erntegut von einem Untergrund,
- eine der Pickup (2) nachgeschaltete Zuführschnecke (3) zur weiteren Förderung des aufgenommenen Ernteguts,
- einen der Zuführschnecke (3) nachgeschalteten Schneidrotor (4) zur Zerkleinerung des aufgenommenen Ernteguts vor dessen Verdichtung,
- einen mechanischen Rotorantrieb (5) zum Drehantrieb des Schneidrotors (4) sowie
- ein Verdichtungsorgan (6), mittels dessen das Erntegut zu einem Erntegutballen (7) verdichtbar ist,
wobei die Pickup (2) derart mit dem Rotorantrieb (5) zusammenwirkt, dass die Pickup (2) mittels des Rotorantriebs (5) drehantreibbar ist,
wobei zwischen den Rotorantrieb (5) und die Pickup (2) eine Kupplung (8) geschaltet ist, die wechselweise zwischen einem Einkuppelzustand, in dem die Pickup (2) mit dem Rotorantrieb (5) gekoppelt ist, und einem Auskuppelzustand, in dem die Pickup (2) von dem Rotorantrieb (5) abgekoppelt ist, überführbar ist,
**dadurch gekennzeichnet, dass**
die Zuführschnecke (3) mit einem Hydraulikmotor (9) zusammenwirkt, mittels dessen die Zuführschnecke (3) drehantreibbar ist,
wobei die Kupplung (8) dazu eingerichtet ist, die Pickup (2) von dem Rotorantrieb (5) abzukoppeln, sobald die Ballenpresse (1) in einen Reversierbetrieb überführt wird, in dem die Zuführschnecke (3) in einem gegenüber einem Normalbetrieb der Ballenpresse (1) entgegengesetzten Drehsinn drehangetrieben wird.

2. Ballenpresse (1) nach Anspruch 1, **dadurch gekennzeichnet, dass** die Kupplung (8) hydraulisch betätigbar ist.

3. Ballenpresse (1) nach Anspruch 2, **gekennzeichnet durch** ein Hydrauliksystem (10), das mit dem Hydraulikmotor (9) und/oder mit der Kupplung (8) zusammenwirkt, wobei die Pickup (2) infolge einer Veränderung eines Antriebszustands der Zuführschnecke (3) automatisch von dem Rotorantrieb (5) abkoppelbar oder automatisch an den Rotorantrieb (5) ankoppelbar ist.

4. Ballenpresse (1) nach einem der vorhergehenden Ansprüche, **gekennzeichnet durch** eine Steuerung (11), mittels der infolge der Veränderung des Antriebszustands der Zuführschnecke (3) die Kupplung (8) mittelbar oder unmittelbar betätigbar ist.

5. Ballenpresse (1) nach Anspruch 4, **gekennzeichnet durch** eine mit der Steuerung (11) zusammenwirkende Sensoreinrichtung (16), die dem Hydraulikmotor (9) zugeordnet ist, wobei mittels der Sensoreinrichtung (16) eine Veränderung eines Betriebsdrucks eines Hydraulikfluids des Hydraulikmotors (9) feststellbar ist.

6. Ballenpresse (1) nach einem der vorhergehenden Ansprüche, **dadurch gekennzeichnet, dass** bei Vorliegen der Ballenpresse (1) in einem Normalbetrieb, in dem die Zuführschnecke (3) bestimmungsgemäß drehangetrieben wird, die Kupplung (8) in ihrem Einkuppelzustand vorliegt und/oder bei Vorliegen der Ballenpresse (1) in einem Reversierbetrieb, in dem die Zuführschnecke (3) in einem gegenüber dem Normalbetrieb entgegengesetzten Drehsinn drehangetrieben wird, die Kupplung (8) in ihrem Auskuppelzustand vorliegt.

7. Ballenpresse (1) nach einem der vorhergehenden Ansprüche, **dadurch gekennzeichnet, dass** in einem Blockadezustand der Zuführschnecke (3), in dem die Zuführschnecke (3) durch Erntegut blockiert ist, die Kupplung (8) in ihrem Auskuppelzustand vorliegt.

8. Ballenpresse (1) nach einem der vorhergehenden Ansprüche, **gekennzeichnet durch** einen Schalter (12), der von einem Maschinenführer der Ballenpresse (1) betätigbar ist, wobei die Ballenpresse (1) mittels Betätigung des Schalters (12) in einen Reversierbetrieb überführbar ist, in dem die Zuführschnecke (3) in einem gegenüber einem Normalbetrieb der Ballenpresse (1) entgegengesetzten Drehsinn drehangetrieben wird.

9. Ballenpresse (1) nach einem der vorhergehenden Ansprüche, **dadurch gekennzeichnet, dass** die Kupplung (8) eine Spannfeder umfasst, mittels deren Spannkraft die Kupplung (8) in einem Normalbetrieb der Ballenpresse (1) in ihrem Einkuppelzustand gehalten ist.

10. Ballenpresse (1) nach Anspruch 9, **dadurch gekennzeichnet, dass** die Kupplung (8) einen Hydraulikanschluss (14) zum Anschluss an ein Hydrauliksystem (10) aufweist, wobei der Anschluss derart vorgenommen ist, dass ein von dem Hydrauliksystem (10) bereitgestellter Hydraulikdruck eine Gegenkraft zu der Spannkraft bewirkt, sodass bei einer Beaufschlagung der Kupplung (8) mit einem die Spannkraft übersteigenden Hydraulikdruck die Kupplung entgegen der Spannfeder in ihren Auskuppelzustand überführbar ist.

11. Ballenpresse (1) nach Anspruch 4 und 10, **dadurch gekennzeichnet, dass** die Steuerung (11) mit einem Steuerventil (20) wirkverbunden ist, mittels dessen ein Hydraulikdruck des Hydrauliksystems (10) auf die Kupplung (8) schaltbar ist.

12. Ballenpresse (1) nach einem der vorhergehenden Ansprüche, **dadurch gekennzeichnet, dass** die Kupplung (8) mit einer Sensoreinrichtung (15) zusammenwirkt, mittels der feststellbar ist, ob sich die Kupplung (8) in ihrem Einkuppelzustand oder ihrem Auskuppelzustand befindet.

13. Verfahren zum Betrieb einer landwirtschaftlichen Ballenpress (1), die Ballenpresse (1) umfassend,
- eine Pickup (2) zur Aufnahme von Erntegut von einem Untergrund,
- eine der Pickup (2) nachgeschaltete Zuführschnecke (3) zur weiteren Förderung des aufgenommenen Ernteguts,
- einen der Zuführschnecke (3) nachgeschalteten Schneidrotor (4) zur Zerkleinerung des aufgenommenen Ernteguts vor dessen Verdichtung,
- einen Rotorantrieb (5) zum Drehantrieb des Schneidrotors (4) sowie
- ein Verdichtungsorgan (6), mittels dessen das Erntegut zu einem Erntegutballen (7) verdichtbar ist,
wobei die Pickup (2) derart mit dem Rotorantrieb (5) zusammenwirkt, dass die Pickup (2) mittels des Rotorantriebs (5) drehantreibbar ist,
wobei zwischen den Rotorantrieb (5) und die Pickup (2) eine Kupplung (8) geschaltet ist, die wechselweise zwischen einem Einkuppelzustand, in dem die Pickup (2) mit dem Rotorantrieb (5) gekoppelt ist, und einem Auskuppelzustand, in dem die Pickup (2) von dem Rotorantrieb (5) entkoppelt ist, überführbar ist,
**dadurch gekennzeichnet, dass**
die Zuführschnecke (3) mit einem Hydraulikmotor (9) zusammenwirkt, mittels dessen die Zuführschnecke (3) drehantreibbar ist,
wobei die Kupplung (8) dazu eingerichtet ist, die Pickup (2) von dem Rotorantrieb (5) abzukoppeln, sobald die Ballenpresse (1) in einen Reversierbetrieb überführt wird, in dem die Zuführschnecke (3) in einem gegenüber einem Normalbetrieb der Ballenpresse (1) entgegengesetzten Drehsinn drehangetrieben wird,
wobei in dem Normalbetrieb der Ballenpresse (1) die Kupplung (8) in ihrem Einkuppelzustand vorliegt,
wobei infolge einer unbeabsichtigten Blockade der Zuführschnecke (3) und/oder im Zuge der Überführung der Ballenpresse (1) in ihren Reversierbetrieb die Kupplung (8) automatisch in ihren Auskuppelzustand überführt wird, sodass die Pickup (2) von dem Rotorantrieb (5) abgekoppelt ist.

14. Verfahren nach Anspruch 13, **dadurch gekennzeichnet, dass** ein Betriebsdruck des Hydraulikmotors (9) mittels einer Sensoreinrichtung (16) überwacht wird, wobei im Falle eines Anstiegs des Betriebsdrucks, insbesondere infolge einer unbeabsichtigten Blockade der Zuführschnecke (3), eine Information an eine Steuerung (11) der Ballenpresse (1) gesendet wird, die daraufhin einen Steuerbefehl sendet, in dessen Folge die Pickup (2) von dem Rotorantrieb (5) abgekoppelt wird.

15. Verfahren nach einem der vorhergehenden Ansprüche, **dadurch gekennzeichnet, dass** die Kupplung (8) hydraulisch betätigt wird, wobei die Kupplung (8) zur Überführung in ihren Auskuppelzustand mit einem Hydraulikdruck eines Hydrauliksystems (10) beaufschlagt und zur Überführung in ihren Einkuppelzustand der Hydraulikdruck abgebaut wird, vorzugsweise sukzessive.

## Claims

1. An agricultural baler (1) for compressing harvested material into bales of harvested material, comprising
- a pickup (2) for picking up harvested material from a substrate,
- a feed auger (3) connected downstream of the pickup (2) for further conveyance of the harvested material which has been picked up,
- a cutting rotor (4) connected downstream of the feed auger (3) for comminuting the harvested material which has been picked up prior to compressing it,
- a mechanical rotor drive (5) for driving the cutting rotor (4) in rotation, as well as
- a compressing means (6), by means of which the harvested material can be compressed into a bale of harvested material (7),
wherein the pickup (2) cooperates with the rotor drive (5) in a manner such that the pickup (2) can be driven in rotation by means of the rotor drive (5),
wherein a clutch (8) is interposed between the rotor drive (5) and the pickup (2) and can be transposed alternately between an engaged state in which the pickup (2) is coupled to the rotor drive (5), and a disengaged state, in which the pickup (2) is uncoupled from the rotor drive (5),
**characterized in that**
the feed auger (3) cooperates with a hydraulic motor (9), by means of which the feed auger (3) can be driven in rotation, wherein the clutch (8) is configured so as to uncouple the pickup (2) from the rotor drive (5) as soon as the baler (1) is transposed into a reverse operation in which the feed auger (3) is driven in rotation in a direction of rotation which is opposite to a normal operation of the baler (1).

2. The baler (1) according to claim 1, **characterized in that** the clutch (8) can be actuated hydraulically.

3. The baler (1) according to claim 2, **characterized by** a hydraulic system (10) which cooperates with the hydraulic motor (9) and/or with the clutch (8), wherein, as a consequence of a modification to a drive state of the feed auger (3), the pickup (2) can be automatically uncoupled from the rotor drive (5) or automatically coupled to the rotor drive (5).

4. The baler (1) according to one of the preceding claims, **characterized by** a controller (11) by means of which, as a consequence of the modification to the drive state of the feed auger (3), the clutch (8) can be actuated indirectly or directly.

5. The baler (1) according to claim 4, **characterized by** a sensor device (16) cooperating with the controller (11), the sensor device being associated with the hydraulic motor (9), wherein a variation in a working pressure of a hydraulic fluid of the hydraulic motor (9) can be detected by means of the sensor device (16).

6. The baler (1) according to one of the preceding claims, **characterized in that** when the baler (1) is operating normally, in which the feed auger (3) is driven in rotation in the intended manner, the clutch (8) is in its engaged state and/or when the baler (1) is operating in reverse, in which the feed auger (3) is driven in rotation in a direction of rotation which is opposite to the normal operation, the clutch (8) is in its disengaged state.

7. The baler (1) according to one of the preceding claims, **characterized in that** in a blocked state of the feed auger (3), in which the feed auger (3) is blocked with harvested material, the clutch (8) is in its disengaged state.

8. The baler (1) according to one of the preceding claims, **characterized by** a switch (12) which can be actuated by a machine driver of the baler (1), wherein, by actuating the switch (12), the baler (1) can be transposed into a reverse operation in which the feed auger (3) is driven in rotation in a direction of rotation which is opposite to that for normal operation.

9. The baler (1) according to one of the preceding claims, **characterized in that** the clutch (8) comprises a tension spring, by means of the tensioning force of which the clutch (8) is held in its engaged state in a normal operation of the baler (1).

10. The baler (1) according to claim 9, **characterized in that** the clutch (8) has a hydraulic connection (14) for connection to a hydraulic system (10), wherein the connection is made in a manner such that a hydraulic pressure provided by the hydraulic system (10) generates a force which counteracts the tensioning force, so that when a hydraulic pressure which exceeds the tensioning force is applied to the clutch (8), the clutch can be transposed into its disengaged state against the tension spring.

11. The baler (1) according to claim 4 and claim 10, **characterized in that** the controller (11) is operatively connected to a control valve (20), by means of which a hydraulic pressure of the hydraulic system (10) can be switched onto the clutch (8).

12. The baler (1) according to one of the preceding claims, **characterized in that** the clutch (8) cooperates with a sensor device (15), by means of which it can be detected as to whether the clutch (8) is in its engaged state or its disengaged state.

13. A method for operating an agricultural baler (1), the baler (1) comprising:
- a pickup (2) for picking up harvested material from a substrate,
- a feed auger (3) connected downstream of the pickup (2) for further conveyance of the harvested material which has been picked up,
- a cutting rotor (4) connected downstream of the feed auger (3) for comminuting the harvested material which has been picked up prior to compressing it,
- a rotor drive (5) for driving the cutting rotor (4) in rotation, as well as
- a compressing means (6), by means of which the harvested material can be compressed into a bale of harvested material (7),
wherein the pickup (2) cooperates with the rotor drive (5) in a manner such that the pickup (2) can be driven in rotation by means of the rotor drive (5),
wherein a clutch (8) is interposed between the rotor drive (5) and the pickup (2) and can be transposed alternately between an engaged state, in which the pickup (2) is coupled to the rotor drive (5), and a disengaged state, in which the pickup (2) is uncoupled from the rotor drive (5),
**characterized in that**
the feed auger (3) cooperates with a hydraulic motor (9), by means of which the feed auger (3) can be driven in rotation, wherein the clutch (8) is configured so as to uncouple the pickup (2) from the rotor drive (5) as soon as the baler (1) is transposed into a reverse operation in which the feed auger (3) is driven in rotation in a direction of rotation which is opposite to a normal operation of the baler (1),
wherein the clutch (8) is in its engaged state in the normal operation of the baler (1),
wherein, as a consequence of an unintentional blockage of the feed auger (3) and/or during the transposition of the baler (1) into its reverse operation, the clutch (8) is automatically transposed into its disengaged state so that the pickup (2) is uncoupled from the rotor drive (5).

14. The method according to claim 13, **characterized in that** a working pressure of the hydraulic motor (9) is monitored by means of a sensor device (16) wherein, in the case of a rise in the working pressure, in particular as a consequence of an unintentional blockage of the feed auger (3), information is sent to a controller (11) of the baler (1) which thereupon sends a control command, as a consequence of which the pickup (2) is uncoupled from the rotor drive (5).

15. The method according to one of the preceding claims, **characterized in that** the clutch (8) is actuated hydraulically, wherein a hydraulic pressure of a hydraulic system is applied to the clutch (8) in order to transpose it into its disengaged state, and in order to transpose it into its engaged state, the hydraulic pressure is relieved, preferably gradually.

## Revendications

1. Presse à balles (1) agricole destinée au compactage de produits récoltés pour obtenir des balles de récolte, comprenant
- un ramasseur (2) pour ramasser la récolte sur un terrain,
- une vis d'amenée (3) placée à la suite du ramasseur (2) et destinée à poursuivre le transport de la récolte ramassée,
- un rotor de coupe (4) placé à la suite de la vis d'amenée (3) et destiné à découper la récolte ramassée, avant le compactage de celle-ci,
- un entraînement de rotor (5) mécanique pour l'entraînement en rotation du rotor de coupe (4), ainsi que
- un organe de compactage (6) au moyen duquel la récolte peut être compactée pour obtenir une balle de récolte (7)
le ramasseur (2) coopérant avec l'entraînement de rotor (5) de manière à ce que le ramasseur (2) puisse être entraîné en rotation au moyen de l'entraînement de rotor (5),
un accouplement (8) étant intercalé entre l'entraînement de rotor (5) et le ramasseur (2), qui peut être modifié en alternance entre un état d'accouplement, dans lequel le ramasseur (2) est accouplé à l'entraînement de rotor (5), et un état de désaccouplement dans lequel le ramasseur (2) est séparé de l'entraînement de rotor (5),
**caractérisée en ce que**
la vis d'amenée (3) coopère avec un moteur hydraulique (9) à l'aide duquel la vis d'amenée (3) peut être entraînée en rotation,
l'accouplement (8) étant agencé pour désaccoupler le ramasseur (2) de l'entraînement de rotor (5) dès que la presse à balles (1) est amenée en mode inversé dans lequel la vis d'amenée (3) est entraînée en rotation dans un sens de rotation qui est opposé à celui d'un service normal de la presse à balles (1).

2. Presse à balles (1) selon la revendication 1, **caractérisée en ce que** l'accouplement (8) peut être actionné par voie hydraulique.

3. Presse à balles (1) selon la revendication 2, **caractérisée par** un système hydraulique (10) qui coopère avec le moteur hydraulique (9) et/ou avec l'accouplement (8), le ramasseur (2) pouvant être désaccouplé automatiquement de l'entraînement de rotor (5) ou accouplé automatiquement à l'entraînement de rotor (5), suite à une modification d'un état d'entraînement de la vis d'amenée (3).

4. Presse à balles (1) selon une des revendications précédentes, **caractérisée par** une commande (11) au moyen de laquelle l'accouplement (8) peut être actionné de façon indirecte ou directe, suite à la modification de l'état d'entraînement de la vis d'amenée (3).

5. Presse à balles (1) selon la revendication 4, **caractérisée par** un dispositif capteur (16) qui coopère avec la commande (11) et est associé au moteur hydraulique (9), le dispositif capteur (16) permettant de constater une modification d'une pression de fonctionnement d'un fluide hydraulique du moteur hydraulique (9).

6. Presse à balles (1) selon une des revendications précédentes, **caractérisée en ce que**, lorsque la presse à balles (1) est en service normal, dans lequel la vis d'amenée (3) est entraînée en rotation conformément à l'utilisation prévue, l'accouplement (8) est à l'état d'accouplement, et/ou lorsque la presse à balles (1) est en mode inversé, dans lequel la vis d'amenée (3) est entraînée dans un sens de rotation qui est opposé à celui du service normal, l'accouplement (8) est dans son état de désaccouplement.

7. Presse à balles (1) selon une des revendications précédentes, **caractérisée en ce que**, dans un état de blocage de la vis d'amenée (3), dans lequel la vis d'amenée (3) est bloquée par des produits récoltés, l'accouplement (8) est dans son état de désaccouplement.

8. Presse à balles (1) selon une des revendications précédentes, **caractérisée par** un commutateur (12) qui peut être actionné par un opérateur de la presse à balles (1), la presse à balles (1) pouvant être amenée, par actionnement du commutateur (12), dans un mode inversé dans lequel la vis d'amenée (3) est entraînée dans un sens de rotation qui est opposé à celui d'un service normal de la presse à balles (1).

9. Presse à balles (1) selon une des revendications précédentes, **caractérisée en ce que** l'accouplement (8) comprend un ressort de rappel dont la force de rappel permet de maintenir l'accouplement (8) dans son état d'accouplement, lors d'un service normal de la presse à balles (1).

10. Presse à balles (1) selon la revendication 9, **caractérisée en ce que** l'accouplement (8) présente un raccord hydraulique (14) destiné au raccordement à un système hydraulique (10), le raccordement étant réalisé de manière à ce qu'une pression hydraulique fournie par le système hydraulique (10) engendre une force antagoniste s'opposant à la force de rappel, de sorte qu'en cas de sollicitation de l'accouplement (8) avec une pression hydraulique dépassant la force de rappel, l'accouplement peut être amené dans son état de désaccouplement, à l'encontre du ressort de rappel.

11. Presse à balles (1) selon la revendication 4 et 10, **caractérisée en ce que** la commande (11) est en liaison fonctionnelle avec une vanne de commande (20) au moyen de laquelle une pression hydraulique du système hydraulique (10) peut être appliquée à l'accouplement (8).

12. Presse à balles (1) selon une des revendications précédentes, **caractérisée en ce que** l'accouplement (8) coopère avec un dispositif capteur (15) qui permet de déterminer si l'accouplement (8) se trouve dans son état d'accouplement ou dans son état de désaccouplement.

13. Procédé de fonctionnement d'une presse à balles (1) agricole, la presse à balles (1) comprenant
- un ramasseur (2) pour ramasser la récolte sur un terrain,
- une vis d'amenée (3) placée à la suite du ramasseur (2) et destinée à poursuivre le transport de la récolte ramassée,
- un rotor de coupe (4) placé à la suite de la vis d'amenée (3) et destiné à découper la récolte ramassée, avant le compactage de celle-ci,
- un entraînement de rotor (5) pour l'entraînement en rotation du rotor de coupe (4), ainsi que
- un organe de compactage (6) au moyen duquel la récolte peut être compactée pour obtenir une balle de récolte (7)
le ramasseur (2) coopérant avec l'entraînement de rotor (5) de manière à ce que le ramasseur (2) puisse être entraîné en rotation au moyen de l'entraînement de rotor (5),
un accouplement (8) étant intercalé entre l'entraînement de rotor (5) et le ramasseur (2), qui peut être modifié en alternance entre un état d'accouplement, dans lequel le ramasseur (2) est accouplé à l'entraînement de rotor (5), et un état de désaccouplement dans lequel le ramasseur (2) est séparé de l'entraînement de rotor (5),
**caractérisé en ce que**
la vis d'amenée (3) coopère avec un moteur hydraulique (9) à l'aide duquel la vis d'amenée (3) peut être entraînée en rotation,
l'accouplement (8) étant agencé pour désaccoupler le ramasseur (2) de l'entraînement de rotor (5) dès que la presse à balles (1) est amenée en mode inversé dans lequel la vis d'amenée (3) est entraînée en rotation dans un sens de rotation qui est opposé à celui d'un service normal de la presse à balles (1).
sachant que
en service normal de la presse à balles (1), l'accouplement (8) est à l'état d'accouplement,
sachant que suite à un blocage non intentionnel de la vis d'amenée (3) et/ou dans le cadre de l'amenée de la presse à balles (1) à son mode inversé, l'accouplement (8) est amené automatiquement dans son état de désaccouplement, de sorte que le ramasseur (2) est désaccouplé de l'entraînement de rotor (5).

14. Procédé la revendication 13, **caractérisé en ce qu'**une pression de fonctionnement du moteur hydraulique (9) est surveillée au moyen d'un dispositif capteur (16), sachant qu'en cas d'augmentation de la pression de fonctionnement, notamment suite à un blocage non intentionnel de la vis d'amenée (3), une information est envoyée à une commande (11) de la presse à balles (1), qui émet alors une instruction de commande, à la suite de laquelle le ramasseur (2) est désaccouplé de l'entraînement de rotor (5).

15. Procédé selon une des revendications précédentes, **caractérisé en ce que** l'accouplement (8) est actionné par voie hydraulique, sachant que l'accouplement (8) est soumis à une pression hydraulique d'un système hydraulique (10) aux fins d'être amené dans son état de désaccouplement, et la pression hydraulique est diminuée pour l'amener dans son état d'accouplement, de préférence de manière progressive.
